# EUROPEAN PATENT APPLICATION

(11) **EP 4 553 811 A1**
(43) Date of publication of application: **14.05.2025**
(21) Application number: 23852258.5
(22) Date of filing: 23.06.2023
(51) Int. Cl.: G09B 9/04, F16D 3/38, G01M 7/06, F15B 15/10

(54) **AUXILIARY SUPPORT DEVICE AND TEST DEVICE PROVIDED WITH SAME**

(30) Priority: 12.08.2022 JP 2022129059
(71) Applicant: Saginomiya Seisakusho, Inc., Tokyo 165-0033 (JP)
(72) Inventor: IN Eisei, Sayama-shi, Saitama 350-1395 (JP); UCHIDA Tomonori, Sayama-shi, Saitama 350-1395 (JP); HOSAKA Tomohiro, Sayama-shi, Saitama 350-1395 (JP)
(74) Representative: Bandpay & Greuter
(86) International application number: PCT/JP2023/023422
(87) International publication number: WO 2024/034274

(57) **Abstract**

Provided is a test apparatus including an auxiliary support device that is installed along with a telescopic device configured to move at multiple degrees of freedom and has a mechanism of receiving a static load within an allowable eccentricity and deviation angle. The test apparatus includes six sets of actuators 10 that extend and contract between a base 101 and a support stand 103 and causes relative postures to change by distances of separation therebetween and vibrates. An auxiliary support device 50 is aligned together at the center of the base and the support stand, and the auxiliary support device includes a spline fitting 60 coupled to the base via a cross shaft joint 51, an upper coupling base portion 80 coupled to the support stand via the cross shaft joint 53 and a second universal fitting 84 of a rotation mechanism 85, a ball spline fitting 70 coupling the spline fitting and the upper coupling base portion such that the ball spline fitting freely extends, contracts, and slides, an intermediate connection member 83 fixed to a lower portion of the upper coupling base portion and located between the base and the support stand, and an air spring 90 with both end portions fixed between the intermediate connection member and the base.

## Description

### [Technical Field]

The present invention relates to a test apparatus equipped with a telescopic device that can be extended and contracted with a low drive force.

### [Background Art]

As a test apparatus that utilizes a plurality of sets of telescopic devices to adjust a distance of separation between universal fittings provided on both ends with a drive force from a drive source, a driving simulator described in Patent Literature 1, for example, is known.

The driving simulator is adapted to utilize six sets of telescopic devices to realize six levels of freedom of causing a top-side support stand supporting a vehicle cockpit to tilt in XYZ directions, a pitch direction, a roll direction, and a yaw direction with respect to a stand (base).

However, it is necessary to cause the drive source to output a large drive force in a case where a test target has a considerable weight, for example, even to maintain a stationary state on a side of the support stand for such telescopic devices. In particular, since the stationary state does not necessarily last for a short period of time, it is necessary to prepare a high-output drive source, which leads to an increase in size of the entire apparatus and an increase in cost.

In addition, although there is an invention described in Patent Literature 2, for example, as an invention of a one-shaft telescopic device in which a stationary load is received by an elastic element such as an air spring, the telescopic device that moves at multiple degrees of freedom cannot respond to motion of a support stand due to twisting of the air spring, shortage of allowable eccentricity and a deviation angle, and the like.

### [Citation List]

### [Patent Literature]

[Patent Literature 1] Japanese Patent Laid-Open No. 2015-33671
[Patent Literature 2] Japanese Translation of PCT International Application Publication No. 2009-130818

### [Summary of Invention]

### [Technical Problem]

Therefore, an object of the present invention is to provide an auxiliary support device that is installed along with a telescopic device that moves at multiple degrees of freedom and has a mechanism that receives a static load within an allowable eccentricity and deviation angle without being twisted, and a test apparatus equipped with the auxiliary support device.

### [Solution to Problem]

An aspect of the invention of an auxiliary support device that solves the above problem is an auxiliary support device that is installed along with a telescopic device with multiple degrees of freedom between a first coupled member and a second coupled member, the auxiliary support device including: an auxiliary member configured to generate an assist force to assist a static drive force of the telescopic device with multiple degrees of freedom including a universal mechanism capable of following motion of one or both of the first coupled member and the second coupled member at multiple degrees of freedom.

An aspect of the invention of a test apparatus that solves the above problem is a test apparatus that includes at least three or more sets of telescopic devices installed along with the auxiliary support device described above between a substrate member as the first coupled member and a top plate member as the second coupled member and changes a posture of the top plate member relative to the substrate member by the telescopic devices receiving a drive force from a drive source and extending and contracting in a direction of separation between the substrate member and the top plate member to thereby change, for each of the telescopic devices, a distance of the separation, the auxiliary support device being adapted such that a first universal fitting with two degrees of freedom in XY directions is coupled to the substrate member and a second universal fitting with three degrees of freedom in XYZ directions is coupled to the top plate member, and including a slide holding mechanism of a linear motion fitting connected to each of the substrate member and the top plate member along with the auxiliary member configured to generate the assist force acting in the direction of separation between the substrate member and the top plate member and relatively and linearly moving in the direction of separation in a freely slidable manner.

### [Advantageous Effects of Invention]

As described above, according to an aspect of the present invention, the auxiliary support device is installed along with the telescopic device with multiple degrees of freedom between the first coupled member (the substrate member, for example) and the second coupled member (the top plate member, for example), and it is possible to generate the assist force and to assist, with the assist force, the static drive force of the telescopic device with multiple degrees of freedom including the universal mechanism capable of following motion at the multiple degrees of freedom.

In the test apparatus in which three or more sets of telescopic devices are installed to change the posture of the top plate member relative to the substrate member, it is possible to assist a static drive force needed by the telescopic devices and to reduce a necessary drive force in conjunction with the slide holding mechanism of the linear motion fitting that relatively and linearly moves in the direction of separation between the substrate member and the top plate member in a slidable manner.

Therefore, it is possible to provide a test apparatus that can cause a telescopic device to operate, including maintaining a stationary state, with a drive source of a low drive force.

### [Brief Description of Drawings]

[Figure 1] Figure 1 is a perspective view illustrating an appearance of a vibration apparatus that is an example of a test apparatus with a telescopic device mounted thereon according to an embodiment of the present invention.
[Figure 2] Figure 2 is a diagram illustrating the vibration apparatus, where (a) is a plan view thereof, and (b) is a front view thereof.
[Figure 3] Figure 3 is a partial longitudinal sectional view illustrating an auxiliary support device installed in the vibration apparatus.
[Figure 4] Figure 4 is a conceptual front view for explaining operations of the auxiliary support device.
[Figure 5] Figure 5 is a block diagram illustrating a control circuit of an air filling amount control device that controls operations of the auxiliary support device.

### [Description of Embodiments]

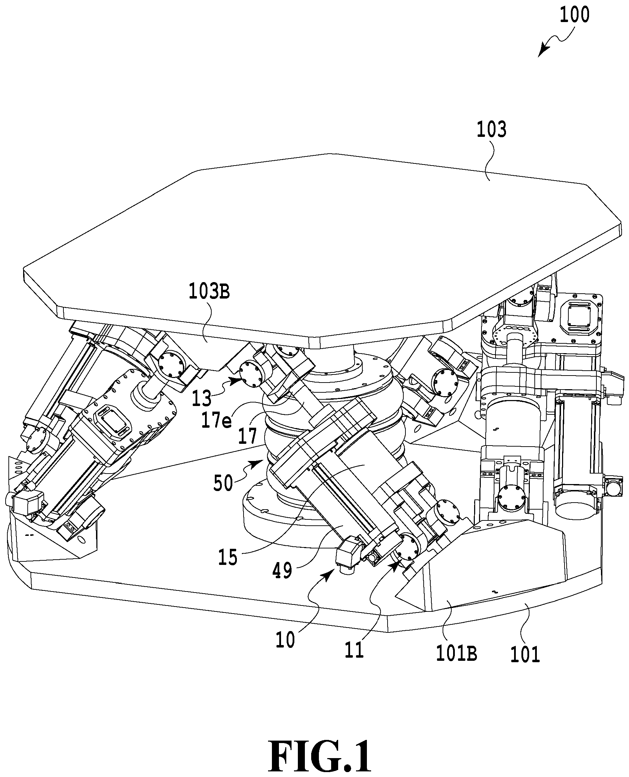

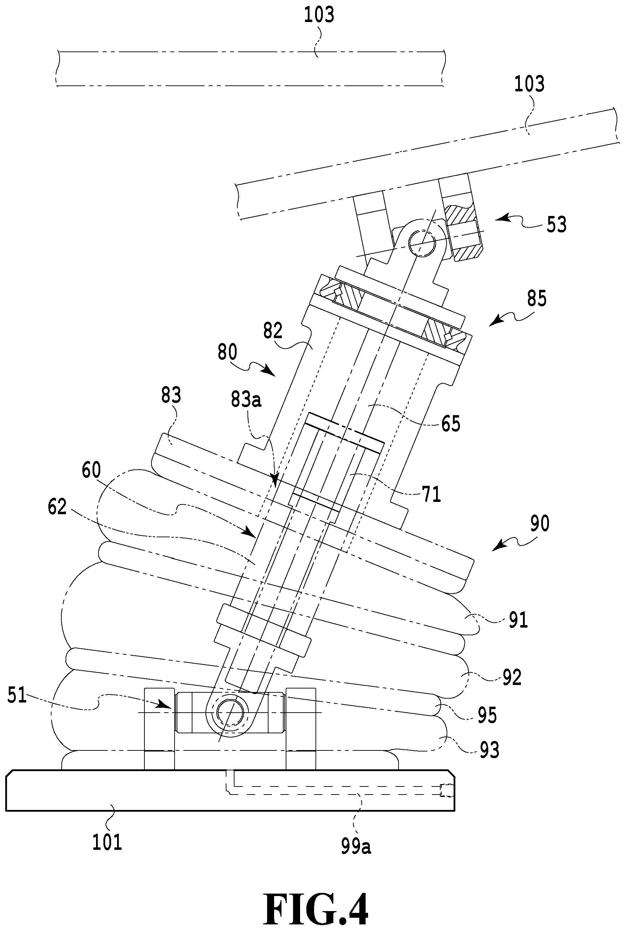

Hereinafter, an embodiment of the present invention will be described in detail with reference to the drawings. Figures 1 to 5 are diagrams illustrating a vibration apparatus that is an example of a test apparatus according to an embodiment of the present invention.

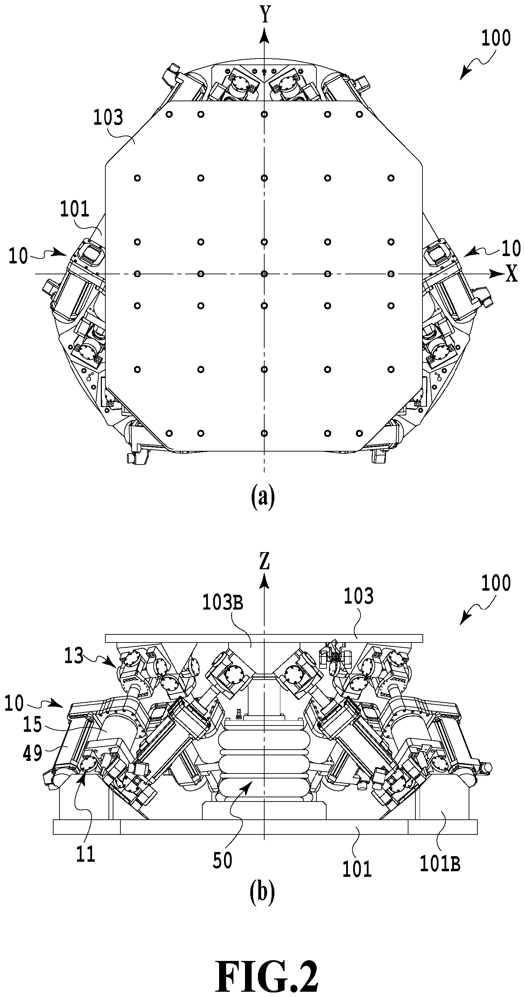

In Figures 1 and 2, a vibration apparatus (test apparatus) 100 is configured to function as a hexapod that constitutes a part of a driving simulator, and is disposed such that six sets of actuators (telescopic devices) 10 are interposed between a base (a substrate member, a stand, a first coupled member) 101, which is installed in a test room or the like, and a support stand (a top plate member, a second coupled member) 103, to which a driving cockpit or the like to be tested is fixed, so as to individually support them. The vibration apparatus 100 is adapted to realize movement at six degrees of freedom such as tilting of the support stand 103 relative to the base 101 in XYZ directions, a pitch direction, a roll direction, and a yaw direction by the six sets of actuators 10 extending and contracting in accordance with control signals from a host computer (not illustrated) of the driving simulator and adjusting distances of separation between installation locations. Although the vibration apparatus 100 including the six sets of actuators 10 will be described as an example in the present embodiment, the invention is not limited thereto, and it is needless to say that the support stand can be displaceably supported relative to the base by including three or more sets of actuators 10, for example.

The vibration apparatus 100 is configured to have a structure that couples both end portions of two sets of actuators 10 to support blocks 101B and 103B located near vertexes of triangles facing each other with substantially centers of the base 101 and the support stand 103 located at the same position and supports the actuators 10. The vibration apparatus 100 is configured to have a structure in which one of the base 101 and the support stand 103 is rotated in a direction in which the support blocks 101B and 103B at three locations relatively deviate by 60° and end portions on one side and end portions on the other side of two sets of actuators 10 are disposed for each of the support blocks 101B and 103B. This structure allows the vibration apparatus 100 to be installed in a posture that expands every two sets out of the six sets of actuators 10 upward in a V-shape, such that the support stand 103 to be supported relative to the base 101 can be supported while being changed or vibrated in a stable state in a desired posture by adjusting a distance of separation between both end portions of each actuator 10.

In addition, each actuator 10 of the vibration apparatus 100 is adapted such that a cross shaft joint 11 that constitutes a universal mechanism is installed at the support block 101B of the base 101, a device base portion 15 supports the actuator 10 in a manner in which the posture thereof relative to the base 101 is freely changeable, a cross shaft joint 13 that constitutes a universal mechanism is also installed in the support block 103B of the support stand 103, and an upper end portion 17e of a shaft 17 held by the device base portion 15 in a manner in which the shaft 17 is freely slidable in the longitudinal direction supports the actuator 10 in a manner in which the posture thereof relative to the support stand 103 is freely changeable.

As a result, the vibration apparatus 100 can support the device base portion 15 of the actuator 10 such that the posture thereof relative to the base 101 is freely changeable by the cross shaft joint 11 oscillating between the base 101 and the device base portion 15, and similarly, the vibration apparatus 100 can freely change the posture of the shaft 17 of the actuator 10 relative to the support stand 103 by the cross shaft joint 13 oscillating between the support stand 103 and the shaft 17. In other words, the vibration apparatus 100 can freely change the posture of the support stand 103 relative to the base 101 by the shaft 17 of the actuator 10, which is supported via the cross shaft joints 11 and 13, sliding in forward and backward directions.

This actuator 10 is adapted to cause the shaft 17 to slide in the forward and backward directions towards the support stand 103 from the side of the base 101 by a servo motor 49 causing forward and backward rotation in accordance with a control signal from the vibration apparatus 100, and to cause the shaft 17 to advance and retreat toward the side of the support stand 103 relative to the side of the base 101 to thereby extend and contract the entire length.

As a result, the vibration apparatus 100 is adapted such that the cross shaft joints 11 and 13 on the sides of both ends achieve support such that relative postures of the base 101 and the support stand 103 are freely changeable in accordance with extension and contraction of the entire length of the actuator 10, and can realize operations such as inclination at the six degrees of freedom and vibration by functioning as the vibration apparatus 100.

Also, the vibration apparatus 100 includes an auxiliary support device 50 installed to be interposed between the base 101 and the support stand 103, and the auxiliary support device 50 is located substantially at the center of the base 101 and the support stand 103 and is configured to assist an operation of supporting the support stand 103 at a desired height relative to the base 101. Here, although a case where one auxiliary support device 50 is installed will be described as an example of the vibration apparatus 100 according to the present embodiment, the present invention is not limited thereto, a plurality of auxiliary support devices 50 may be installed, and in such a case, the auxiliary support devices 50 are preferably evenly disposed.

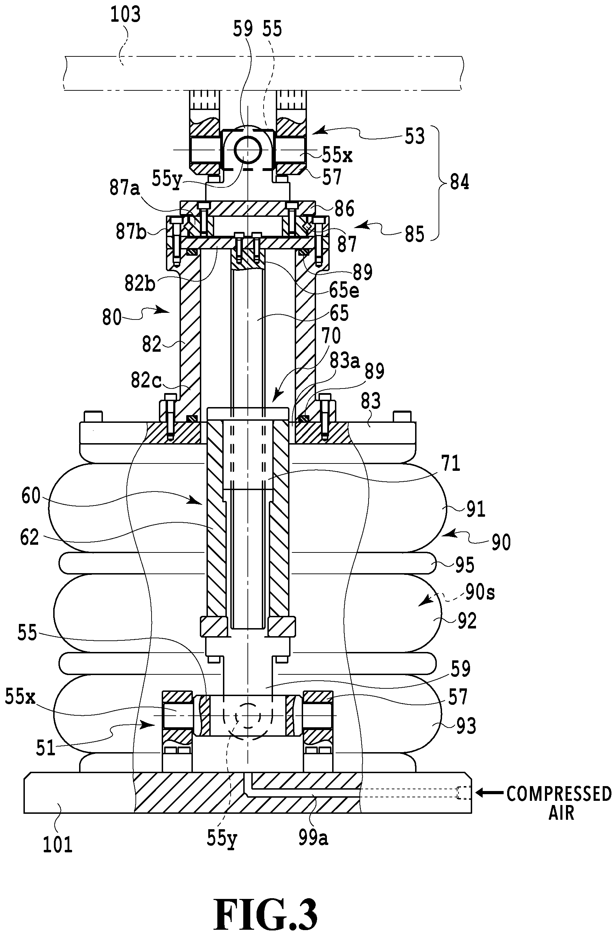

The auxiliary support device 50 couples a cross shaft joint (first universal fitting) 51 to an upper surface of the base 101, and a spline fitting 60 is supported such that a posture thereof relative to the base 101 is freely changeable, as illustrated in Figure 3 similarly to the actuator 10. The cross shaft joint 51 is installed inside an air spring 90 of multiple levels and an upper coupling base portion 80 along with a ball spline fitting 70, as will be described later, and a spline shaft 65 of the ball spline fitting 70 is connected to an inner lower surface of an upper flange 82b of the upper coupling base portion 80. The upper coupling base portion 80 is sealed with an O-ring 89 provided at a connecting portion with the air spring 90 and the upper flange 82b to thereby maintain airtightness of an internal space 90s of the air spring 90. Here, the length of the upper coupling base portion 80 may be changed by the distance between the support stand 103 and the base 101, or the upper coupling base portion 80 may be eliminated.

In addition, a second universal fitting 84 including a cross shaft joint 53 and a rotation mechanism 85 of a rotation shaft bearing, which will be described later, is installed in the auxiliary support device 50 on the lower surface of the support stand 103, and the second universal fitting 84 achieves support such that an upper end portion 65e of a spline shaft (first slide member) 65 of the ball spline fitting 70 held in a manner in which the ball spline fitting 70 is freely slidable in the longitudinal direction of the spline fitting 60 can freely change the posture thereof relative to the support stand 103 via the upper coupling base portion 80. The second universal fitting 84 constitutes a fitting with three degrees of freedom including the cross shaft joint 53 and the rotation mechanism 85 and can thus follow a large angle (roll, pitch, and yaw) of the support stand 103. Here, a so-called spherical joint (shaft bearing) with three degrees of freedom may be used for the second universal fitting 84 in a case where an angle to be followed is small.

In addition, the cross shaft joint 51 installed on the base 101 is a fitting with two degrees of freedom, a degree of freedom in rotation around a shaft to be extended and contracted is constrained, and a twisting force around the shaft due to a frictional force of the rotation fitting 85 can thus be received by the base 101 via the cross shaft joint 51. For this reason, the air spring 90 that is coupled to the cross shaft joint 51 via the upper coupling base portion 80 and the ball spline fitting 70 can operate without being twisted.

As a result, an air spring portion 90 of the auxiliary support device 50 and the upper coupling base portion 80 are supported via the cross shaft joint 51, the second universal fitting 84, and the ball spline fitting 70 such that the posture of the support stand 103 relative to the base 101 is freely changeable without being twisted.

The cross shaft joints 51 and 53 of the base 101 and the support stand 103 are configured as so-called universal joints that utilize the cross member 55 as X shafts and Y shafts, and the auxiliary support device 50 is adapted to follow a changes in relative postures of the base 101 and the support stand 103 of the vibration apparatus 100 so as not to hinder the change in relative posture of the support stand 103 with respect to the base 101.

Specifically, the cross shaft joints 51 and 53 are adapted such that a pair of X shafts 55x of the cross member 55 are rotatably and axially supported by bearings 57b inside a pair of shaft bearings 57 that are provided to stand on the upper surface of the base 101 and the lower surface of the support stand 103 with separation in the X shaft direction and a pair of Y shafts 55y of the cross member 55 are rotatably and axially supported by bearings 59b inside a pair of shaft bearings 59 that are provided to stand at a lower portion of the spline fitting 60 and an upper portion of the upper coupling base portion 80 with separation in the Y shaft direction.

As a result, the auxiliary support device 50 can allow the cross member 55, the lower portion of the spline fitting 60, and the upper portion of the upper coupling base portion 80 to oscillate and freely change relative postures thereof with respect to the base 101 and the support stand 103 to thereby enable the support of the actuator 10 to be assisted, by the shaft bearings 57 and 59 of the base 101 and the support stand 103 rotatably holding the X shafts 55x and the Y shafts 55y of the X shaft joints 51 and 53 (cross member 55).

The auxiliary support device 50 is adapted such that the spline fitting 60 on the side of the base 101 includes a housing member 62 to which a nut (a spline shaft bearing, a second slide member) 71 that holds a spline shaft 65 in a manner in which the spline shaft 65 is slidable (inserted and extracted) in the axis direction is fixed on a side of one end portion so as to configure the ball spline fitting 70 (manufactured by THK Co., Ltd., for example) along with the spline shaft 65 and the housing member 62 is fixed to be located behind the cross shaft joint 51 on the side of the base 101. Here, the ball spline fitting 70 includes spline grooves formed on an outer circumferential surface of the spline shaft 65 and an inner circumferential surface of the nut 71 to extend in the axis direction and accommodate a plurality of balls such that the balls are rollable although illustration is omitted, and one of the spline shaft 65 and the nut 71 does not rotate relative to the other to realize relative sliding movement while reducing a load generated at the time of only linear relative movement. Although the ball spline fitting 70 causing a small amount of friction is used in the present embodiment, a spline structure utilizing sliding may also be used instead.

In the auxiliary support device 50, the upper coupling base portion 80 on the side of the support stand 103 includes a bottomed cylindrical member 82 to which the upper end portion 65e of the spline shaft 65 of the ball spline fitting 70 is fixed, and the cylindrical member 82 is installed to be located behind the cross shaft joint 53 on the side of the support stand 103 with the rotation mechanism 85, which will be described later, interposed therebetween. In the upper coupling base portion 80, the upper end portion 65e of the spline shaft 65 of the ball spline fitting 70 is fixed to the upper flange 82b of the cylindrical member 82, and the spline shaft 65 is accommodated inside a cylindrical portion 82c thereof.

The rotation mechanism 85 is configured to include a disk member 86 located at the top of the upper coupling base portion 80, the upper flange 82b of the cylindrical member 82 of the upper coupling base portion 80 to which the upper end portion 65e of the spline shaft 65 of the ball spline fitting 70 is fixed, and a bearing 87 that coaxially and rotatably couples the disk member 86 and the cylindrical member 82 with the disk member 86 and the upper flange 82b of the cylindrical member 82 caused to face each other. The bearing 87 of the rotation mechanism 85 is also adapted to be able to rotatably couple and support the upper coupling base portion 80 (cylindrical member 82) fixed to the upper end portion 65e of the spline shaft 65 of the ball spline fitting 70 relative to the cross shaft joint 53 on the side of the support stand 103 by relatively rotatably coupling an outer circumferential surface of a small ring member 87a fixed to the disk member 86 and an inner circumferential surface of a large ring member 87b fixed to the upper flange 82b of the cylindrical member 82.

As a result, the cross shaft joints 51 and 53 allow (follow) a free change in relative postures of the base 101 and the support stand 103 in accordance with extension and contraction of the actuator 10, the rotation mechanism 85 allows relative rotation of the facing relationship with a change in distance of separation between the base 101 and the support stand 103, and the auxiliary support device 50 can thus maintain a coupled and supported state of the base 101 and the support stand 103.

In the coupled and supported state of the base 101 and the support stand 103, the housing member 62 to which the nut 71 of the ball spline fitting 70 of the spline fitting 60 on the side of the base 101 is formed into a cylindrical shape, for example, such that the spline shaft 65 of the ball spline fitting 70 can be inserted into the housing member 62, and the state where the spline fitting 60 on the side of the base 101 is coupled in a linear posture relative to the upper coupling base portion 80 on the side of the support stand 103 is maintained by the nut 71 and the spline shaft 65 being relatively and slidably coupled. In other words, the ball spline fitting 70 constitutes a slide holding mechanism that functions as a linear motion fitting.

Furthermore, in the auxiliary support device 50, the upper coupling base portion 80 is adapted such that the upper end portion 65e of the spline shaft 65 of the ball spline fitting 70 is fixed to the upper flange 82b of the cylindrical member 82, the spline shaft 65 is accommodated inside the cylindrical portion 82c, and the intermediate connection member 83 with a disk shape is installed at the cylindrical edge end side lower portion of the cylindrical portion 82c of the cylindrical member 82 of the upper coupling base portion 80 so as to be located at the intermediate location in the facing direction of the base 101 and the support stand 103. The intermediate connection member 83 with the disk shape at the lower portion of the upper coupling base portion 80 (cylindrical member 82) includes an opening portion 83a that allows the housing member 62 of the spline fitting 60, to which the nut 71 of the ball spline fitting 70 is fixed, to be inserted thereinto.

The auxiliary support device 50 forms the airtight internal space 90s inside the air spring 90 with opening edges on both end sides of the air spring (a repelling member functioning as the auxiliary member) 90 with substantially a cylindrical shape sealed with rubber, between the lower surface of the intermediate connection member 83 at the lower portion of the upper coupling base portion 80 (cylindrical member 82) and the upper surface of the base 101.

The air spring 90 is formed into a substantially cylindrical shape that constitutes the internal space 90s by stacking, in multiple layers, elastic outer circle components 91 to 93 that are made of an elastic material and circulate in the parallel direction between the base 101 and the support stand 103 with rigid ring-shaped rigid components 95 interposed among the elastic outer circle components 91 to 93. Here, it is needless to say that the air spring 90 is not limited to an air spring of multiple levels, may have a cylindrical shape with a single level in a case where the air spring 90 has sufficient flexibility, is not limited to an air spring with a cylindrical shape, and may be formed into a substantially square tube shape with a rectangular section, for example, a quadrangular section, or may be formed in another irregular shape.

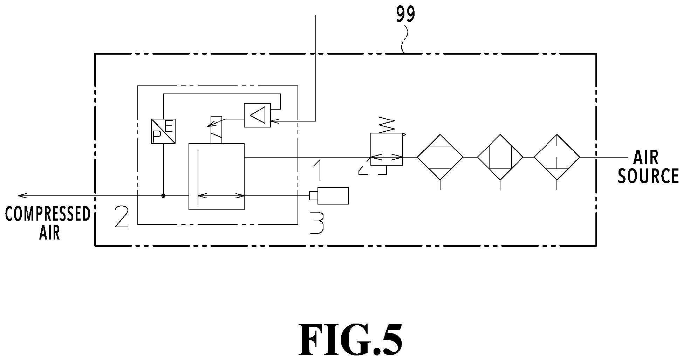

In the auxiliary support device 50, a fluid passage 99a communicating with the internal space 90s of the air spring 90 is formed inside the base 101, and an air filling amount control device 99 (see Figure 5) is externally connected to the fluid passage 99a. A general-purpose compressor that discharges compressed air or the like is connected to the air filling amount control device 99 as illustrated in Figure 5, and enables a desired inner pressure to be generated inside the internal space 90s of the air spring 90 while a general-purpose pressure control circuit detects the amount of filling and the pressure of filling of the compressed air. At this time, the lower surface of the intermediate connection member 83 on the side of the air spring 90 and the lower surface of the upper flange 82b of the upper coupling base portion 80 serve as pressure receiving surfaces of the compressed air, generate, as a necessary assist force, a repulsive force pushing back the support stand 103 to which a mounting weight is applied, and gives the assist force to the top plate 101 via the second universal fitting 84 as illustrated in Figure 3.

As a result, the auxiliary support device 50 can cause the air filling amount control device 99 to generate a desired inner pressure inside the internal space 90s of the air spring 90, generate a repulsive force acting in the direction of separation between the base 101 and the support stand 103 and apply the repulsive force, and support the support stand 103 from the base 101 in the direction of separation with a constant pressure by maintaining the inner pressure inside the air spring 90 at a desired constant pressure, for example. In addition, the auxiliary support device 50 can adjust the inner pressure inside the air spring 90 with the air filling amount control device 99 in accordance with the weight of the target to be tested on the support stand 103, for example, thereby supporting the support stand 103 with the desired repulsive force. Here, the air spring 90 generates the repulsive force with the compressed air filling its internal space 90s. Springs, elastic rubbers, and the like may be disposed as an auxiliary member of the repulsive member at a plurality of locations between the intermediate connection member 83 and the base 101 to generate a desired constant elastic force and apply the constant elastic force. In a case where a load (mounted mass) in a static state received by the top plate 103 does not vary, a way to use the air spring 90 by omitting the air filling amount control device 99 and sealing a constant pressure inside the internal space 90s of the air spring 90 (filling and sealing) can also be adopted.

Therefore, the vibration apparatus 100 can extend and retract the six sets of actuators 10 to perform six degrees of inclination and vibration operations of the support stand 103 relative to the base 101. At this time, without hindering the change in the posture of the support stand 103 relative to the base 101, the auxiliary support device 50 can twist and add the desired assist force (repulsive force) to assist the support of the plurality of actuators 10 without excessive eccentric angle.

In this manner, the vibration apparatus (test apparatus) 100 according to the present invention can execute similar test operations with a reduce output drive force of the plurality of actuators 10, and even in a case where the support stand 103 is brought into a stationary state, for example, it is possible to cause the auxiliary support device 50 to assist support with a reduced drive force of the actuators 10.

For this reason, the vibration apparatus 100 can allow the auxiliary support device 50 to apply a desired repulsive force not only at the time of driving of the actuators 10 but also in a standby state (stationary state) and can reduce a rated output drive force of the servo motor 49 of the actuator 10.

As a result, it is possible to reduce the drive force needed by the servo motors 49 of the plurality of actuators 10 for miniaturization and also to reduce cost.

The scope of the present invention is not limited to the exemplary embodiment illustrated and described and also includes all embodiments that produce effects equivalent to those intended by the present invention. Furthermore, the scope of the present invention is not limited to the combinations of features of the invention specified by each claim and can be specified by any desired combinations of specific features from among all the disclosed features.

Although the actuator using the servo motor was described as an example in description of the present embodiment, it is also possible to apply the invention to a telescopic device with multiple degrees of freedom using other power, such as a hydraulic actuator, for example.

In addition, it is also possible to use another type of spline fitting (for example, a sliding guide spline fitting) for the ball spline fitting (a rolling guide spline fitting) 70.

### [Reference Signs List]

10 Actuator (telescopic device)
11, 13 Cross shaft joint (universal mechanism)
49 Servo motor
50 Auxiliary support device
51 Cross shaft joint (first universal fitting)
53 Cross shaft joint
55 Cross member
60 Spline fitting
62 Housing member
65 Spline shaft (first slide member)
70 Ball spline fitting (linear motion fitting, slide holding mechanism)
71 Nut (spline shaft bearing, second slide member)
80 Upper coupling base portion
82 Cylindrical member
83 Intermediate connection member
84 Second universal fitting
85 Rotation mechanism
86 Disk member
87 Bearing
90 Air spring (auxiliary member)
90s Internal space
91 to 93 Elastic outer circle component
95 Rigid component
99 Air filling amount control device
99a Fluid passage
100 Vibration apparatus (test apparatus)
101 Base (substrate member, stand, first coupled member)
101B, 103B Support block
103 Support stand (top plate member, second coupled member)

## Claims

1. An auxiliary support device installed along with a telescopic device with multiple degrees of freedom between a first coupled member and a second coupled member, the auxiliary support device comprising:
an auxiliary member configured to generate an assist force to assist a static drive force of the telescopic device with multiple degrees of freedom including a universal mechanism capable of following motion of one or both of the first coupled member and the second coupled member at multiple degrees of freedom.

2. The auxiliary support device according to claim 1, wherein an air spring having an internal space in an elastic material is used as the auxiliary member, the internal space being filled with air.

3. The auxiliary support device according to claim 2, wherein
a universal fitting with two degrees of freedom in XY directions is coupled to the first coupled member, and a universal fitting with three degrees of freedom in XYZ directions is coupled to the second coupled member, and
the auxiliary support device comprises a linear motion fitting that is installed inside the air spring of multiple levels, which are two or more levels, to generate the assist force acting in a direction of separation between the first coupled member and the second coupled member and linearly moves in the direction of separation in order for the universal fitting with the two degrees of freedom to prevent the air spring from twisting.

4. The auxiliary support device according to claim 3, wherein the universal fitting with the three degrees of freedom is configured by combining a cross shaft joint and a rotation mechanism.

5. The auxiliary support device according to claim 3, wherein the universal fitting with the three degrees of freedom uses a spherical shaft bearing.

6. The auxiliary support device according to claim 3, wherein a spline fitting is used as the linear motion fitting.

7. A test apparatus that includes at least three or more sets of telescopic devices installed along with the auxiliary support device according to any one of claims 1 to 6 between a substrate member as the first coupled member and a top plate member as the second coupled member and changes a posture of the top plate member relative to the substrate member by the telescopic devices receiving a drive force from a drive source and extending and contracting in a direction of separation between the substrate member and the top plate member to thereby change, for each of the telescopic devices, a distance of the separation,
the auxiliary support device
being adapted such that a first universal fitting with two degrees of freedom in XY directions is coupled to the substrate member and a second universal fitting with three degrees of freedom in XYZ directions is coupled to the top plate member, and
including a slide holding mechanism of a linear motion fitting connected to each of the substrate member and the top plate member along with the auxiliary member configured to generate the assist force acting in the direction of separation between the substrate member and the top plate member and relatively and linearly moving in the direction of separation in a freely slidable manner.

8. The test apparatus according to claim 7, comprising, as the auxiliary member, an air spring of multiple levels, which are two or more levels, configured to generate a repulsive force as the assist force acting in the direction of separation between the substrate member and the top plate member,
wherein the air spring is connected on a side of the substrate member and on a side of the top plate member to enable the repulsive force to act on a member coupled to the side of the substrate member and the side of the top plate member with the first universal fitting installed therein.

9. The test apparatus according to claim 8, further comprising an intermediate connection member located at an intermediate location in the direction of separation between the substrate member and the top plate member,
wherein the air spring is connected as a member on the side of the top plate member to the intermediate connection member.

10. The test apparatus according to claim 8, wherein the air spring is configured such that an internal space accommodating compressed air is formed in an exterior member made of an elastic material and the repulsive force to be applied to the side of the top plate member is generated in accordance with an amount of compressed air with which the internal space is to be filled.

11. The test apparatus according to claim 8, further comprising an air filling amount control device configured to adjust and control an amount of compressed air with which an internal space of the air spring is to be filled.
